# EUROPÄISCHE PATENTSCHRIFT

(11) **EP 3 928 385 B1**
(45) Veröffentlichungstag und Bekanntmachung des Hinweises auf die Patenterteilung: **02.08.2023**
(21) Anmeldenummer: 20701446.5
(22) Anmeldetag: 21.01.2020
(51) Int. Cl.: B23K 101/04, H01R 43/02, B23K 20/10, H01R 4/02

(54) **VERFAHREN ZUM VERSCHWEISSEN ZUMINDEST EINER SCHWEISSHÜLSE MIT EINEM ANSCHLUSSTEIL**
METHOD FOR WELDING AT LEAST ONE WELDING SLEEVE TO A CONNECTION PART
PROCÉDÉ POUR SOUDER AU MOINS UN MANCHON DE SOUDURE POURVU D'UN ÉLÉMENT DE CONNEXION

(30) Priorität: 20.02.2019 DE 102019104261
(43) Veröffentlichungstag der Anmeldung: 29.12.2021
(73) Patentinhaber: Auto-Kabel Management GmbH, 79688 Hausen i.W. (DE)
(72) Erfinder: SCHARKOWSKI, Oliver, 03172 Schenkendöbern OT Atterwasch (DE)
(74) Vertreter: Cohausz & Florack
(86) Internationale Anmeldenummer: PCT/EP2020/051351
(87) Internationale Veröffentlichungsnummer: WO 2020/169292

(56) Entgegenhaltungen:
- DE-A1-102009 009 399
- DE-B3-102013 101 876
- DE-B3-102016 105 768

## Beschreibung

Der Gegenstand betrifft ein Verfahren zum Verschweißen zumindest einer Schweißhülse mit einem Anschlussteil.

Die vorgenannte Verbindung zwischen Schweißhülse und Anschlussteil wird insbesondere in automotiven Anwendungen zum Einsatz kommen, vorzugsweise bei der Verbindung von Schweißhülsen mit Anschlussteilen wie Bus-Bars oder Flachleitern.

In der Automobilindustrie kommen in letzter Zeit immer mehr Flachleiter anstelle von Rundleitungen zum Einsatz, da diese gegenüber herkömmlichen Rundleitern hinsichtlich ihrer Stromtragfähigkeit und aus baurumtechnischen Gründen überlegen sind. Für die Kontaktierung mit elektrischen Verbrauchern kamen bis dato jedoch weiterhin Rundleiter zum Einsatz, die mittels Stoffschluss mit dem Flachleiter verbunden werden. Mit Blick auf Modul- und Zellverbinder von Batteriezellen ist jedoch auch eine Verbindung von Flachleitern untereinander notwendig. Dabei ist beim Einsatz von Flachleitern als Hauptstrang oder als Bus-Bar für die Batterieleitung oder als Modul- bzw. Zellverbinder eine Kontaktierung zwischen Flachleiter und Verbraucher gewollt. Eine solche Kontaktierung kann beispielsweise über Anschlussbolzen und Anschlussösen erfolgen. Ein Anschlussbolzen ist dabei meist unmittelbar am Verbraucher bzw. dem zu verbindenden Bauteilen angeordnet.

Es hat sich jedoch gezeigt, dass die Anbringung von Anschlussbolzen an Flachleiter in vielen Fällen problematisch ist. Solche Verbindungen müssen elektrisch stabil und vor Umwelteinflüssen geschützt sein. Bei der Verwendung von Aluminium oder weichen Kupferwerkstoff als Leitermaterial des Flachbandleiters muss weiterhin sichergestellt sein, dass dieser sich beim Anschluss des Anschlussbolzens nicht verformt.

Insbesondere bei der Verschraubung des Anschlussbolzens an dem Flachleiter kann es dazu kommen, dass sich die Schraube in das Flachleitermaterial hineindrückt, da bei dem geforderten Anzugsmoment der Schraubenkopf oder ein Flansch an dem Bolzen gegenüber der relativ hohen Viskosität des Werkstoffs des Flachleiters eine zu hohe Flächenpressung bewirkt. Dies hat zur Folge, dass entweder die geforderten Anzugsmomente nicht eingehalten werden können oder der Werkstoff des Flachleiters bei Anziehen zum Fließen neigt. Außerdem kann es dazu kommen, dass sich die Verschraubungen bei mechanischer Beanspruchung lösen, da sich das beschreibende Material des Flachbandleiters unter den Verschraubungen verformen kann. Darüber hinaus ist meist gefordert und gewollt, dass die Kontaktflächen der Fügepartner eine Beschichtung aufweisen. Diese Beschichtung, die meist aus Nickel und/oder Zinn gebildet ist, gewährleistet einen Korrosionsschutz dar und stellt eine langlebige elektrische Verbindung sicher.

Des Weiteren ist bekannt, Schweißhülsen, im Wesentlichen rotationssymmetrische Schweißhülsen, mittels Reibschweißen mit dem Flachleiter stoffschlüssig zu verbinden. Hierzu müssen die Schweißhülsen allerdings derart designt werden, dass die Schweißhülsen formschlüssig von einem Reibwerkzeug aufgenommen werden können, damit die Schweißhülsen zuverlässig mittels Reibschweißens mit dem Anschlussteil verschweißt werden können. Dies schränkt unter anderem die Fertigungsart ein und führt des Weiteren zu gesteigerten Kosten. Ein weiterer Nachteil des vorgenannten Verfahrens sind lange Prozesszeiten.

Auch ist es bekannt, eine Schweißhülse mittels torsionalen Ultraschallschweißens mit dem Flachleiter stoffschlüssig zu verbinden. Wobei das Ultraschallschweißwerkzeug eine dem Anschlussteil gegenüberliegende Fläche eines Flansches der Schweißhülse zur Energieeinbringung kontaktiert und somit einen Abdruck in Form der Sonotrodenkontur auf dem Flansch der Schweißhülse hinterlässt. Dies ist insbesondere hinsichtlich der späteren Kontaktierung des Anschlussteils bzw. der Schweißhülse vom großen Nachteil, da keine intakte flächige Kontaktierung mehr erfolgen kann. Weiter wird die Beschichtung der Schweißhülse flanschseitig beschädigt, was einem Korrosionsschutz und einer langlebigen elektrischen Verbindung entgegenwirkt.

Die DE 10 2009 009 399 A1 betrifft im Wesentlichen elektrische Flachleitungen mit einer Öffnung für einen Anschlussbolzen. Die DE 10 2009 009 399 A1 offenbart den Oberbegriff des Anspruchs 1.

Dem Gegenstand lag die Aufgabe zugrunde, eine Möglichkeit zum Fügen eines Anschlussteils und einer Schweißhülse zur Verfügung zu stellen, welche prozesssicher ist und nur eine geringe Prozesszeit aufweist.

Diese Aufgabe wird durch ein Verfahren nach Anspruch 1 gelöst.

Eine Ultraschallschweißnaht entsteht bevorzugt zwischen einem Teil der äußeren Mantelfläche der Schweißhülse und einem Teil der Innenfläche der Aussparung des Anschlussteils und/oder zwischen zumindest Teilen einer Flanschfläche der Schweißhülse und zumindest Teilen der Fläche des Anschlussteils, die dem Flansch zugewandt ist. Insbesondere handelt es sich bei dem verwendeten Schweißverfahren um torsionales Ultraschallschweißen.

Bei der Aussparung des Anschlussteils handelt es sich insbesondere um ein im Wesentlichen kreisrundes Loch, weiter bevorzugt um ein im Wesentlichen kreisrundes Durchgangsloch. Es ist bevorzugt, dass das Anschlussteil als Bus-Bar oder als Leiter ausgestaltet ist. Bei einer Ausgestaltung des Anschlussteils als Leiter ist es weiter bevorzugt den Leiter als Flachleiter, aufweisend zwei Schmalseiten und zwei Längsseiten auszugestalten. Bei einem Flachleiter ist es bevorzugt, dass die zumindest eine Aussparung in eine der beiden Längsseiten eingebracht ist.

Durch vorgenanntes Verfahren können in vorteilhafter Weise geringe Prozesszeiten bei dem Verschweißen von zumindest einer Schweißhülse und eines Anschlussteils realisiert werden.

Gemäß der Erfindung hat die Schweißhülse eine Öffnung, die insbesondere als Durchgangsöffnung ausgestaltet ist, welche sich entlang der Längsachse der Schweißhülse erstrecken kann.

Die innere Mantelfläche der Schweißhülse hat im Bereich der Öffnung der Schweißhülse eine stirnseitige, umlaufende Kante. Die Innenkante der Öffnung kann angefast sein, so dass sich der Durchmesser der Öffnung der Schweißhülse in Längsrichtung der Schweißhülse verjüngt, insbesondere konisch oder bogenförmig. Ausgehend von einer Stirnfläche der Schweißhülse verjüngt sich somit die Öffnung in Längsrichtung der Schweißhülse. Die Verjüngung kann kegelstumpfförmig oder bogenförmig verlaufen. Die Verjüngung hat bevorzugt einen Steigungswinkel zwischen 10° und 80°, bevorzugt zwischen 25° und 55°. Die Öffnung öffnet sich somit in Längsrichtung der Schweißhülse mit einem genannten Steigungswinkel Die Verjüngung der Öffnung dient als Kontaktfläche zwischen der Schweißhülse und einem Schweißwerkzeug, so dass das Schweißwerkzeug ausreichend Energie für die stoffschlüssige Verbindung einbringen kann.

Dadurch, dass die innere Mantelfläche der Schweißhülse von dem Ultraschallschweißwerkzeug berührt wird, kann vermieden werden, dass eine spätere Kontaktfläche der Schweißhülse einen Abdruck des Ultraschallschweißwerkzeugs aufweist. Ein solcher Abdruck ist hinsichtlich der Kontaktierung nachteilig. Denn es ist bevorzugt, dass das Ultraschallschweißwerkzeug die Schweißhülse nur an der inneren Mantelfläche der Schweißhülse kontaktiert und dementsprechend auch nur an der inneren Mantelfläche der Schweißhülse einen Konturabdruck hinterlässt. Nach einer bevorzugten Ausgestaltung ist die Schweißhülse im Wesentlichen rohrförmig ausgestaltet.

Gemäß einem Ausführungsbeispiel ist die Schweißhülse aus zumindest zwei Abschnitten gebildet, wobei ein erster Abschnitt einen ersten Außendurchmesser und ein zweiter Abschnitt einen zweiten, größeren als den ersten Außendurchmesser aufweist und wobei die Schweißhülse in die Aussparung eingeführt wird, bis der zweite Abschnitt der Schweißhülse zumindest teilweise an dem Anschlussteil anliegt.

Es ist bevorzugt, dass der Innendurchmesser der in dem Anschlussteil angeordneten Aussparung im Wesentlichen kongruent zu dem Außendurchmesser des ersten Abschnitts der Schweißhülse ist. Der zweite Abschnitt ist bevorzugt als kragenförmiger Flansch gebildet, wodurch eine gute Befestigung der Schweißhülse an dem Anschlussteil ermöglicht wird. Der Innendurchmesser der beiden Abschnitte der Schweißhülse ist bevorzugt im Wesentlichen identisch. Eine Seite des Flansches ist in der eingeführten Position dem Anschlussteil zugewandt. Es ist ebenfalls möglich, dass der Außendurchmesser des ersten Abschnitts entlang der Längsachse der Schweißhülse unverändert ist, wohingegen sich der Außendurchmesser des zweiten Abschnitts zu einem stirnseitigen Ende der Schweißhülse hin verjüngt. Denkbar sind auch geometrische Ausbildungen des Außendurchmessers die vom Innendurchmesser verschieden sind um die Kontaktfläche der Schweißhülse zu vergrößern.

Gemäß einem weiteren Ausführungsbeispiel wird die Schweißhülse mittels des Ultraschallschweißwerkzeugs in eine hochfrequente Schwingung um die Längsachse der Schweißhülse versetzt. Die hochfrequente Schwingung weist bevorzugt eine Frequenz in einem Bereich von 15 bis 40 kHz, insbesondere eine Frequenz in einem Bereich von 20 bis 35 kHz auf. Hierdurch kann die Schweißhülse in zuverlässiger Weise bei geringen Prozesszeiten mit dem Anschlussteil verschweißt werden.

Des Weiteren ist es bevorzugt, dass die Schweißhülse im Wesentlichen zeitgleich in die Aussparung eingeführt und in Schwingung versetzt wird. Dies ist insbesondere vorteilhaft, um eine auf dem Anschlussteil und/oder auf der Schweißhülse befindliche Oxidschicht aufzubrechen und hierdurch eine vorteilhafte stoffschlüssige Verbindung zu erreichen.

Gemäß einem Ausführungsbeispiel wird vorgeschlagen, dass das Schweißwerkzeug einen Endbereich aufweist, welche in die Öffnung in der Schweißhülse eingeführt werden kann. Somit kann der der Endbereich dornenförmig, insbesondere kegelstumpfförmig, in die Öffnung eingreifen. Durch eine dornenförmige, insbesondere kegelstumpfförmige, Ausgestaltung des Endbereichs des Ultraschallschweißwerkzeugs wird es ermöglicht, mit demselben Ultraschallschweißwerkzeug Schweißhülsen unterschiedlicher Durchmesser, insbesondere unterschiedlicher Innendurchmesser, mit dem Anschlussteil zu verschweißen.

Gemäß einem weiteren Ausführungsbeispiel wird vorgeschlagen, dass das Ultraschallschweißwerkzeug einen Endbereich zur Aufnahme zumindest eines Teils der Schweißhülse aufweist und dass der Endbereich dornenförmig, insbesondere kegelstumpfförmig, ausgebildet ist. Die Geometrie der Dornenform sollte vorteilhafter Weise geometrisch ähnlich, insbesondere kongruent zur Geometrie der Öffnung in der Schweißhülse im Bereich der Verjüngung sein. Der dornenförmige Endbereich kann sich zur Stirnseite hin verjüngen. Ein Steigungswinkel kann zwischen 10° und 80° liegen, bevorzugt zwischen 25° und 55°.

Es wird vorgeschlagen, dass die Prozesszeit zur Durchführung des Verfahrens unter 2,0 Sekunden, insbesondere unter 1,5 Sekunden, beträgt. Eine kurze Prozesszeit ist insbesondere vorteilhaft für die Wirtschaftlichkeit und die Produktivität des gegenständlichen Schweißverfahrens. Als Prozesszeit ist ein Schweißzyklus, also das Verschweißen einer Schweißhülse mit dem Anschlussteil, anzusehen.

Ein weiterer nicht erfindungsgemäßer Aspekt ist ein System umfassend zumindest eine Schweißhülse und ein elektrisches Anschlussteil.

Indem das Ultraschallschweißwerkzeug bevorzugt nur die innere Mantelfläche der Schweißhülse kontaktiert, hinterlässt das Ultraschallschweißwerkzeug nur auf der inneren Mantelfläche der Schweißhülse einen Konturabdruck. Dementsprechend kann der Flansch der Schweißhülse eine Höhe von unter 2,0 mm, insbesondere eine Höhe von unter 1,5 mm, besonders bevorzugt eine Höhe von unter 1,0 mm aufweisen, da von dem Flansch nur geringe Kräfte aufgenommen werden müssen. Hierdurch steht die Schweißhülse lediglich geringfügig über das Anschlussteil hervor, was hinsichtlich einer Reduktion des Bauraums vorteilhaft ist.

Es ist bevorzugt, dass sowohl der erste Abschnitt als auch der zweite Abschnitt hohlrohrförmig ausgestaltet sind, so dass sowohl der erste Abschnitt als auch der zweite Abschnitt der Schweißhülse eine Durchgangsöffnung mit einer inneren Mantelfläche aufweisen.

Des Weiteren ist bevorzugt, dass das Anschlussteil ein Bus-Bar oder ein Leiter, insbesondere ein Flachleiter, ist. Insbesondere handelt es sich um ein Kraftfahrzeug-Bus-Bar oder einen Kraftfahrzeugflachleiter.

Nach einer Ausgestaltung ist die Schweißhülse mittels einer Ultraschallschweißnaht, insbesondere mittels einer torsionalen Ultraschallschweißnaht, mit dem Anschlussteil verbunden. Insbesondere ist zumindest ein Teil der äußeren Mantelfläche des ersten Abschnitts mit zumindest einem Teil der Innenfläche der Aussparung mittels Ultraschallschweißens, insbesondere mittels torsionalen Ultraschallschweißens, miteinander verschweißt.

Auch kann ein Teil des Flansches mit seiner dem Anschlussteil zugewandten Flanschfläche mit dem Anschlussteil mittels Ultraschallschweißen, insbesondere mittels torsionalen Ultraschallschweißen, verschweißt sein.

Gemäß einem weiteren Ausführungsbeispiel wird vorgeschlagen, dass sich die Durchgangsöffnung in den ersten Abschnitt erstreckt und dass der Innendurchmesser der Durchgangsöffnung entlang der Längsachse der Schweißhülse im Wesentlichen gleichbleibend ist. Hierdurch kann die Schweißhülse auch bei einer geringen Höhe des zweiten Abschnitts in zuverlässiger Weise auf das Ultraschallschweißwerkzeug aufgesteckt werden und mittels einer Ultraschallschweißnaht mit dem Anschlussteil verschweißt werden.

Hinsichtlich einer späteren elektrischen Kontaktierung des Flansches der Schweißhülse ist es ferner vorteilhaft, wenn der Konturabdruck des Ultraschallschweißwerkzeugs nur an der inneren Mantelfläche der Schweißhülse angeordnet ist. Die Flanschoberfläche weist somit keinen Konturabdruck des Ultraschallschweißwerkzeugs auf. Diesbezüglich ist es weiter bevorzugt, dass das Ultraschallschweißwerkzeug die Schweißhülse nur an ihrer inneren Mantelfläche berührt.

Ein weiterer nicht erfindungsgemäßer Aspekt ist eine Ultraschallschweißvorrichtung, insbesondere eine Ultraschallschweißvorrichtung zur Durchführung eines zuvor beschriebenen Verfahrens. Die hinsichtlich des Verfahrens beschriebenen Vorteile gelten gleichermaßen für die gegenständliche Ultraschallschweißvorrichtung.

Als Endbereich ist vorzugsweise derjenige Bereich des Ultraschallschweißwerkszeugs zu verstehen, welcher dazu ausgebildet ist, mit einem zu fügenden Werkstück, insbesondere mit einer zu fügenden Schweißhülse, in Kontakt zu treten.

Durch die dornenförmige, insbesondere kegelstumpfförmige, Ausbildung des Endbereichs wird es in konstruktiv vorteilhafter Weise ermöglicht, unterschiedliche zu fügende Werkstücke, insbesondere unterschiedliche zu fügende Schweißhülsen, mit demselben Ultraschallschweißwerkzeug zu fügen. Durch eine dornenförmige, insbesondere kegelstumpfförmige, Konturierung des Endbereichs des Ultraschallschweißwerkzeugs kann sowohl das Schweißteil sicher aufgenommen als auch in eine hochfrequente Schwingung um die Längsachse des Schweißteils versetzt werden.

Es ist bevorzugt, dass der Endbereich ausgestaltet ist, zu fügende Werkstücke, insbesondere zu fügende Schweißhülsen, mit unterschiedlichen Innendurchmessern aufzunehmen und mit einem Anschlussteil zu verschweißen. Hierdurch lassen sich in effizienter Weise unterschiedliche Schweißhülsen mit demselben Ultraschallschweißwerkzeug fügen.

Nachfolgend wird der Gegenstand anhand einer Ausführungsbeispiele zeigenden Zeichnung näher erläutert. In der Zeichnung zeigen:
- Fig. 1: einen Querschnitt einer Schweißhülse,
- Fig. 2: ein Anschlussteil mit einer Aussparung und
- Fig. 3: ein eine Ausgestaltung eines Ultraschallschweißwerkzeugs mit Schweißhülse und Anschlussteil während des Schweißvorgangs.

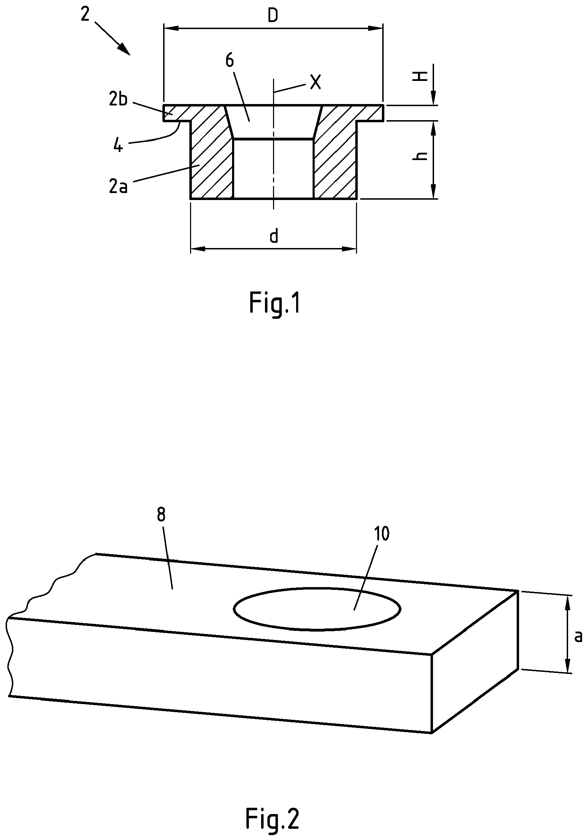

Fig. 1 zeigt eine Schweißhülse 2. Die Schweißhülse 2 ist aus zwei Abschnitten 2a und 2b gebildet. Die Abschnitte 2a und 2b sind nebeneinander in Richtung der Längsachse X der Schweißhülse 2 angeordnet.

Die zwei Abschnitte 2a, b können einstückig aus dem Vollmaterial der Schweißhülse 2 gebildet sein.

Zu erkennen ist, dass der Abschnitt 2a einen geringeren Durchmesser d hat, als der Abschnitt 2b, der den Durchmesser D hat. Durch den größeren Durchmesser D ist der Abschnitt 2b flanschartig an dem Abschnitt 2a angeordnet, wodurch sich eine in Richtung des Abschnitts 2a weisende Auflagefläche 4 bildet.

Der Abschnitt 2a hat vorzugsweise eine Höhe h, welche der Materialstärke des mit der Schweißhülse 2 zu verbindenden Anschlussteils entspricht. Der als Flansch gebildete Abschnitt 2b hat eine Höhe H, die bevorzugt geringer als 2,5 mm, insbesondere geringer als 1,5 mm und besonders bevorzugt geringer als 1,0 mm ist.

Die Schweißhülse 2 ist rohrförmig ausgestaltet und weist eine Durchgangsöffnung 6 mit einer inneren Mantelfläche auf. Die Durchgangsöffnung 6 geht durch den ersten Abschnitt 2a und den zweiten Abschnitt 2b hindurch.

Zu erkennen ist, dass sich der Durchmesser der Durchgangsöffnung 6 ausgehend von dem stirnseitigen Ende im Abschnitt 2b in Längsrichtung der Schweißhülse 2 entlang der Achse X verkleinert. Diese Verjüngung der Durchgangsöffnung kann kegelstumpförmig, wie gezeigt, oder bogenförmig sein. Die Verjüngung hat insbesondere einen Steigungswinkel zwischen 25° und 55°.

Fig. 2 zeigt ein Anschlussteil 8 mit einer Aussparung 10, welche in Form einer kreisrunden Durchgangsöffnung vorgesehen ist. Das Anschlussteil 8 ist vorliegend als Bus-Bar ausgestaltet. Die Aussparung 10 hat ein Profil, welches vorzugsweise im Wesentlichen kongruent zu dem Außendurchmesser des ersten Abschnitts 2a ist. Die Stärke a des Anschlussteils 8 entspricht bevorzugt der Höhe h des ersten Abschnitts 2a. Das Anschlussteil 8 ist vorzugsweise aus einem Aluminiumwerkstoff gebildet, wohingegen die Schweißhülse 2 vorzugsweise aus einem Kupferwerkstoff, aus Stahl oder dergleichen gebildet ist.

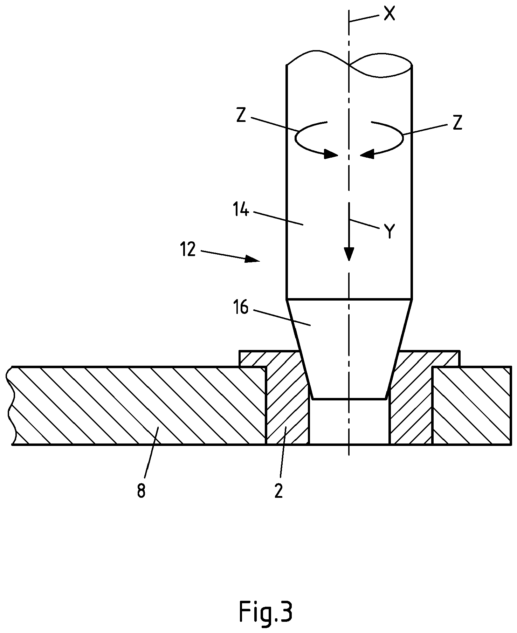

Fig. 3 zeigt eine Ausgestaltung eines Ultraschallschweißwerkzeugs 12 mit Schweißhülse 2 und Anschlussteil 8 während des Schweißvorgangs. Das Ultraschallschweißwerkzeug ist vorzugsweise als Sonotrode 12 ausgebildet, wobei die Sonotrode 12 einen kreiszylindrischen Grundkörper 14 und einen Endbereich 16 aufweist, wobei der Endbereich 16 sich in Richtung seines stirnseitigen Endes verjüngt, insbesondere im Wesentlichen kegelstumpfförmig oder bogenförmig.. Der Steigungswinkel der Verjüngung beträgt bevorzugt zwischen 25° und 55°. Der Außendurchmesser des Endbereichs 16 ist bevorzugt geometrisch ähnlich oder kongruent zu dem sich verjüngenden Innendurchmessers der Öffnung 6 im Abschnitt 2b. Die äußere Mantelfläche des Endbereichs 16 ist bevorzugt geometrisch ähnlich oder kongruent zu der inneren Mantelfläche der Öffnung 6 im Bereich der Verjüngung. Aufgrund des kegelstumpfförmigen Endbereichs 16 können Schweißhülse 2 mit unterschiedlichen Durchgangsöffnungen 6 auf dieselbe Sonotrode 12 aufgesteckt werden.

Die Schweißhülse 2 wird zunächst auf die Sonotrode 12 aufgesteckt. Durch den kegelförmigen Endbereich 16 tritt die Sonotrode 12 nur in Kontakt mit der inneren Mantelfläche der Aussparung 10, so dass die Schweißhülse 2 an ihren äußeren Flächen nach dem Schweißvorgang im Wesentlichen keinen Konturabdruck der Sonotrode 12 aufweist.

Nachdem die Schweißhülse 2 auf die Sonotrode 12 aufgesteckt wurde ist es bevorzugt, dass die Schweißhülse 2 im Wesentlichen gleichzeitig in die Aussparung 10 in Richtung des Pfeils Y eingeführt wird und in eine hochfrequente Schwingung um die Längsachse X der Schweißhülse 2 in Richtung der Pfeile Z versetzt wird. Die Schweißhülse 2 wird bis zum Anliegen der Auflagefläche 4 an dem Anschlussteil 8 in die Aussparung 10 eingeführt.

Nach dem Erzeugen einer Ultraschallschweißnaht zwischen der Schweißhülse 2 und dem Anschlussteil 8 wird die Sonotrode 12 entfernt und das Verfahren zum Verschweißen der Schweißhülse 2 mit dem Anschlussteil 8 ist abgeschlossen. Bevorzugt weist ein solches Verfahren eine Prozessdauer von unter 2,0 Sekunden, insbesondere von unter 1,5 Sekunden, auf.

## Patentansprüche

1. Verfahren zum Verschweißen zumindest einer Schweißhülse (2) mit einem elektrischen Anschlussteil (8),
- wobei das Anschlussteil (8) zumindest eine Aussparung (10) aufweist,
- wobei die Schweißhülse (2) eine Öffnung (6), insbesondere eine Durchgangsöffnung, mit einer inneren Mantelfläche aufweist,
- bei dem die Schweißhülse (2) auf ein Ultraschallschweißwerkzeug aufgesteckt wird,
- bei dem die Schweißhülse (2) in die Aussparung (10) eingeführt wird und
- bei dem zumindest ein Teil der Schweißhülse (2) mit dem Anschlussteil (8) mittels des Ultraschallschweißwerkzeugs (14) verschweißt wird,
**dadurch gekennzeichnet,**
- **dass** die innere Mantelfläche der Schweißhülse (2) von dem Ultraschallschweißwerkzeug (14) kontaktiert wird.

2. Verfahren nach Anspruch 1,
**dadurch gekennzeichnet,**
- **dass** sich die Öffnung (6) ausgehend von einer Stirnfläche der Schweißhülse (2) in Längsrichtung der Schweißhülse (2) verjüngt, insbesondere konisch oder bogenförmig verjüngt, insbesondere mit einem Steigungswinkel zwischen 10° und 80°, insbesondere zwischen 25° und 55°.

3. Verfahren nach einem der vorhergehenden Ansprüche,
**dadurch gekennzeichnet,**
- **dass** zumindest ein Teil der Schweißhülse (2) von einem Endbereich des Ultraschallschweißwerkzeug (14) aufgenommen wird und
- **dass** der Endbereich dornenförmig, insbesondere kegelstumpfförmig, ausgebildet ist.

4. Verfahren nach Anspruch 1 oder 2,
**dadurch gekennzeichnet,**
- **dass** die Schweißhülse (2) aus zumindest zwei Abschnitten (2a, 2b) gebildet ist,
- **dass** ein erster Abschnitt (2a) einen ersten Außendurchmesser und ein zweiter Abschnitt (2b) einen zweiten, größeren als den ersten Außendurchmesser (2a) aufweist und
- **dass** die Schweißhülse (2) in die Aussparung (10) eingeführt wird, bis der zweite Abschnitt (2b) der Schweißhülse (2) zumindest teilweise an dem Anschlussteil (8) anliegt.

5. Verfahren nach einem der vorhergehenden Ansprüche,
**dadurch gekennzeichnet,**
- **dass** die Schweißhülse (2) mittels des Ultraschallschweißwerkzeugs (14) in eine hochfrequente Schwingung um die Längsachse der Schweißhülse (2) versetzt wird.

6. Verfahren nach einem der vorhergehenden Ansprüche,
**dadurch gekennzeichnet,**
- **dass** die Schweißhülse (2) im Wesentlichen zeitgleich in die Aussparung (10) eingeführt und in Schwingung versetzt wird.

7. Verfahren nach einem der vorhergehenden Ansprüche,
**dadurch gekennzeichnet,**
- **dass** die Prozesszeit zur Durchführung des Verfahrens unter 2,0 Sekunden, insbesondere unter 1,5 Sekunden, beträgt.

## Claims

1. Method for welding at least one welding sleeve (2) to an electrical connection part (8), wherein:
- the connection part (8) has at least one recess (10),
- the welding sleeve (2) has an opening (6), in particular a through-hole, with an inner lateral surface,
- the welding sleeve (2) is slid onto an ultrasonic welding tool,
- the welding sleeve (2) is inserted into the recess (10) and
- at least a part of the welding sleeve (2) is welded to the connection part (10) using the ultrasonic welding tool (14),
**characterized in that,**
- the inner lateral surface of the welding sleeve (2) is in contact with the ultrasonic welding tool (14).

2. Method according to claim 1,
**characterized in that,**
- the opening (6) tapers, in particular tapers conically or arcuately, starting from an end face of the welding sleeve (2) in the longitudinal direction of the welding sleeve )2=, in particular with an angle of inclination between 10° and 80°, in particular between 25° and 55°.

3. Method according to one of the preceding claims,
**characterized in that,**
- at least part of the welding sleeve (2) is received by an end region of the ultrasonic welding tool (14), and
- the end region is mandrel-like, in particular truncated cone shaped.

4. Method according to claim 1 or 2,
**characterized in that,**
- the welding sleeve (2) is formed from at least two sections (2a, 2b),
- a first section (2a) has a first outside diameter and a second section (2b) has a second outside diameter larger than the first outside diameter (2a), and
- the welding sleeve (2) is slid into the recess (10) until the second section (2b) of the welding sleeve (2) is at least partially in contact with the connection part. (8)

5. Method according to one of the preceding claims,
**characterized in that,**
- the welding sleeve (2) is set into a high-frequency oscillation around the longitudinal axis of the welding sleeve (2) by means of the ultrasonic welding tool (14).

6. Method according to one of the preceding claims,
**characterized in that,**
- the welding sleeve (2) is inserted into the recess (10) and substantially simultaneously set into vibration.

7. Method according to one of the preceding claims,
**characterized in that,**
- the process time for carrying out the method is less than 2.0 seconds, in particular less than 1.5 seconds.

## Revendications

1. Procédé pour souder au moins une douille à souder (2) avec une pièce de raccordement électrique (8),
- la pièce de raccordement (8) a au moins un évidement (10),
- où la douille de soudage (2) a une ouverture (6), en particulier une ouverture de passage, avec une surface enveloppant intérieure,
- où la douille à souder (2) est mise sur un outil de soudage par ultrasons,
- où la douille à souder (2) est introduit dans l'évidement (10) et
- où au moins une partie de la douille à souder (2) est soudée à la pièce de raccordement (8) au moyen de l'outil de soudage par ultrasons (14),
**caractérisé en ce**
- **que** la surface enveloppant intérieure de la douille à souder (2) est mise en contact par l'outil de soudage par ultrasons (14).

2. Procédé selon la revendication 1,
**caractérisé en ce**
- **que** l'ouverture (6) se rétrécit à partir d'une surface frontale de la douille à souder (2) dans la direction longitudinale de la douille à souder (2), en particulier en forme de cône ou d'arc, en particulier avec un angle d'inclinaison compris entre 10° et 80°, en particulier entre 25° et 55°.

3. Procédé selon l'une des revendications précédentes,
**caractérisé en ce**
- **qu'**au moins une partie de la douille à souder (2) est reçue par une zone d'extrémité de l'outil de soudage par ultrasons (14), et
- **que** la zone d'extrémité est en forme de mandrin, en particulier en forme de cône tronqué.

4. Procédé selon la revendication 1 ou 2,
**caractérisé en ce**
- **que** la douille de soudage (2) est formé d'au moins deux sections (2a, 2b),
- **qu'**une première section (2a) a un premier diamètre extérieur et une deuxième section (2b) un deuxième diamètre extérieur plus grand que le premier diamètre extérieur (2a), et
- **que** la douille de soudage (2) est introduite dans l'évidement (10) jusqu'à ce que la deuxième section (2b) de la douille de soudage (2) est au moins partiellement en contact avec la pièce de raccordement (8).

5. Procédé selon l'une des revendications précédentes,
**caractérisé en ce**
- **que** la douille à souder (2) est soumise à une oscillation à haute fréquence autour de l'axe longitudinal de la douille à souder (2) au moyen de l'outil de soudage par ultrasons (14).

6. Procédé selon l'une des revendications précédentes,
**caractérisé en ce**
- **que** la douille de soudage (2) est introduite dans l'évidement (10) et mise en oscillation sensiblement en même temps.

7. Procédé selon l'une des revendications précédentes,
**caractérisé en ce**
- **que** la durée du processus pour l'exécution du procédé est inférieure à 2,0 secondes, en particulier inférieure à 1,5 secondes.
